# EUROPEAN PATENT SPECIFICATION

(11) **EP 3 875 920 B1**
(45) Date of publication and mention of the grant of the patent: **28.02.2024**
(21) Application number: 20160589.6
(22) Date of filing: 03.03.2020
(51) Int. Cl.: G01G 15/00, B65B 43/46, B65B 1/46

(54) **UNIT FOR WEIGHING CONTAINERS AND RESPECTIVE METHOD**
VORRICHTUNG UND VERFAHREN ZUM WIEGEN VON BEHÄLTERN
DISPOSITIF ET PROCEDE POUR MESURER LE POIDS DE RECIPIENTS

(43) Date of publication of application: 08.09.2021
(73) Proprietor: Volpak, S.A.U., 08130 Santa Perpetua De Mogoda, Barcelona (ES)
(72) Inventor: Quaglia, Silvio, 20142 MILANO (IT)
(74) Representative: Bianciardi, Ezio

(56) References cited:
- KR-A- 20130 047 560

## Description

This invention relates to the forming, filling and sealing of containers made, for example, of plastic or paper, and usable for containing and dosing diverse products such as, for example, loose materials or grouped products, which may belong to different industries, including the food, pharmaceutical, cosmetics, health or other industries. In a preferred but non-limiting application, the containers are pre-filled pouches.

In this industrial sector, it is extremely important for production processes to be able to ensure that finished products conform with predetermined specifications in terms of weight.

In other words, it is essential that individual pieces be weighed very precisely and without errors or uncertainties.

Furthermore, since weighing is performed in an industrial context, it is of fundamental importance that the weighing unit be efficient and fast, so as not to hinder the performance of the machinery it is installed in.

In other words, the weighing times of the unit must be such as to avoid unwanted effects such as bottlenecking, for example.

Known in production contexts are several production lines which comprise weighing units that operate continuously.

More specifically, in pouch production lines, the pouches are sent to the weighing unit by movement means that convey the pouches towards respective weighers.

Typically, these weighers have a receiving portion, normally a contoured plate, onto which the pouches are placed by the movement means.

After being weighed, the pouches are picked up once again and carried away from the weighing unit.

Relevant prior art in this context is patent document KR 2013 0047560 A.

These solutions have several advantages, including, for example, efficiency and weighing speed, which make their use advantageous in a production line.

These solutions also have several disadvantages, however.

First of all, the pouch is placed by the movement means in uncontrolled fashion so it is not possible to precisely determine either the position or the orientation of the pouch once it has been dropped onto the weigher plate. This uncertainty may lead to problems in the subsequent stages of production because the means used to retrieve the pouch from the weigher have to approach a pouch that is oriented in an uncontrolled, hence random, manner.

Also, the movement means of a unit of this kind are expensive on account of the structural complexity required to retrieve and transport the pouches necessitating several degrees of freedom.

In this context, this invention has for an aim to meet the above mentioned needs and, more specifically, one aim of this invention is to provide a weighing unit and method which allow optimizing the process of weighing the containers, while eliminating problems of imprecision and improving the timing efficiency of the production line.

A further aim of this invention is to provide a weighing unit that is structurally simplified.

These and other aims, which are more apparent in the description which follows, are achieved by a weighing unit according to independent claim 1 and a corresponding method according to independent method claim 9.

More specifically, the weighing unit comprises a weighing station provided with at least one grasping gripper configured to adopt an engaged configuration, in which it holds a container, and a released configuration in which it releases the container. The weighing station is also provided with a weighing means, associated with the at least one grasping gripper and configured to measure the weight of the container being held by the grasping gripper.

The weighing unit also comprises movement means configured to convey the container along a feed path that passes through the weighing station and comprising retaining elements movable along the feed path and configured to adopt a conveying configuration, suitable for holding and conveying the container, and a released configuration, in which the retaining elements release the container.

More specifically the weighing station according to the invention comprises a plurality of grasping grippers associated with a respective plurality of weighing means and configured to transfer and weigh, preferably simultaneously, a respective plurality of the containers.

In one advantageous aspect of the invention, the grasping grippers and the retaining elements are configured and/or mutually disposed for acting on distinct portions of the same container in such a way as to transfer at least one container between the at least one grasping gripper and at least one corresponding retaining element through at least one configuration of simultaneously engaging the same container with a grasping gripper and a retaining element.

Preferably, the container has a shape with a main positioning plane (in particular, the container is delimited by sealed edges extending in the main positioning plane) and/or is made in the shape of a previously filled pouch. The invention also relates to a method for weighing containers, implementable preferably by the weighing unit, comprising the steps of conveying at least one container towards the weighing station, weighing the container and conveying the container away from the weighing station while continuously controlling the spatial orientation of the container.

More specifically, the method comprises a step of transferring, which precedes and/or follows the step of weighing, performed through at least one sub-step of gripping the container with the grasping gripper and with the retaining elements simultaneously.

Advantageously, therefore, the orientation and position of the containers are always uniquely defined. Thus, the weighing unit does not need structurally complex and expensive movement means configured to retrieve and convey the containers.

More specifically, this aim is achieved by an automatic and optimized movement of the containers within the weighing unit in which each container is securely held at all times by at least one part of the weighing unit or of the movement means. In other words, the container is never left free to drop or slide in uncontrolled manner.

Further features and advantages of this invention are more apparent in the detailed description of preferred but non-exclusive embodiments of the weighing unit and method, which are described below with reference to the accompanying drawings, provided solely by way of non-limiting example and in which:
- Figure 1 is a schematic perspective view of a preferred embodiment of a weighing unit according to this invention;
- Figures 2A-2E represent a sequence of steps of the weighing method carried out by the weighing unit of Figure 1.

With reference to the accompanying drawings, the numeral 1 denotes in its entirety a weighing unit for weighing containers B according to the invention. In the context of this invention, the container B has a shape with a main vertical positioning plane (in particular, the container B is delimited by sealed edges extending in the main positioning plane) and/or is made in the shape of a previously filled pouch.

Further, the term "pouches" is used to denote containers made, for example, of plastic or paper or, in general, other soft material, typically small in size, and usable for containing and dosing diverse products such as, for example, loose materials or products collected in groups, which may belong to different industries, including the food, pharmaceutical, cosmetics, health or other industries.

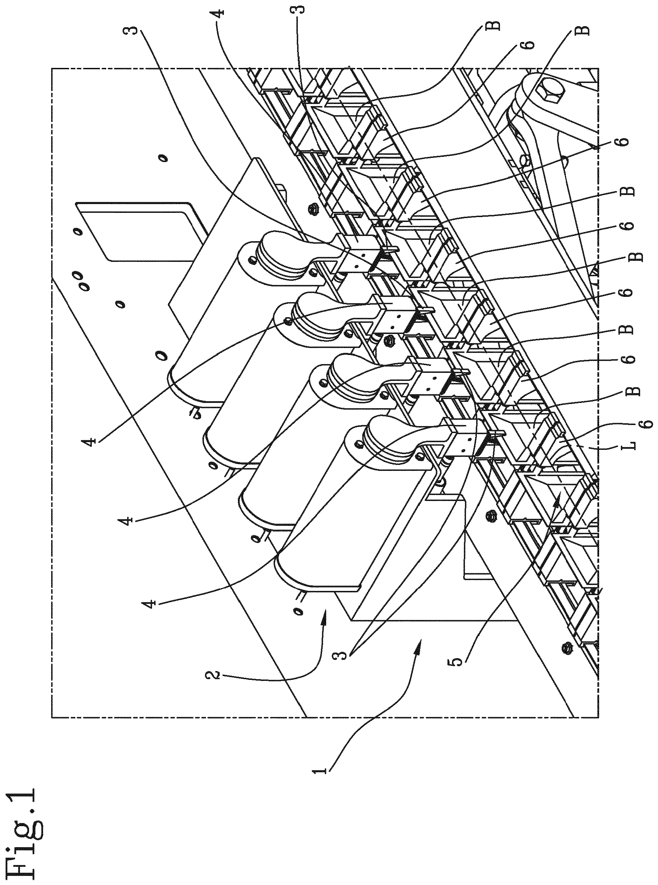

Figure 1 shows a non-limiting example embodiment of the unit 1, used for weighing containers B in the form of pouches.

The unit 1 essentially comprises a weighing station 2 and movement means 5 configured to convey the containers B along a feed path L which passes through the weighing station 2.

The movement means comprise an endless conveyor, in particular of the articulated or chain type, which extends along the feed path L.

Further, the movement means 5 comprise retaining elements 6 mounted on the endless conveyor and hence movable along the feed path L and configured to hold the containers B according to a predetermined orientation. Preferably, the retaining elements 6 are configured so that they grip and feed the containers B in such a way that the positioning planes thereof are oriented substantially vertically.

Still more preferably, the retaining elements 6 are configured so that the containers B are fed in such a way that the positioning planes thereof are parallel with the feed path L.

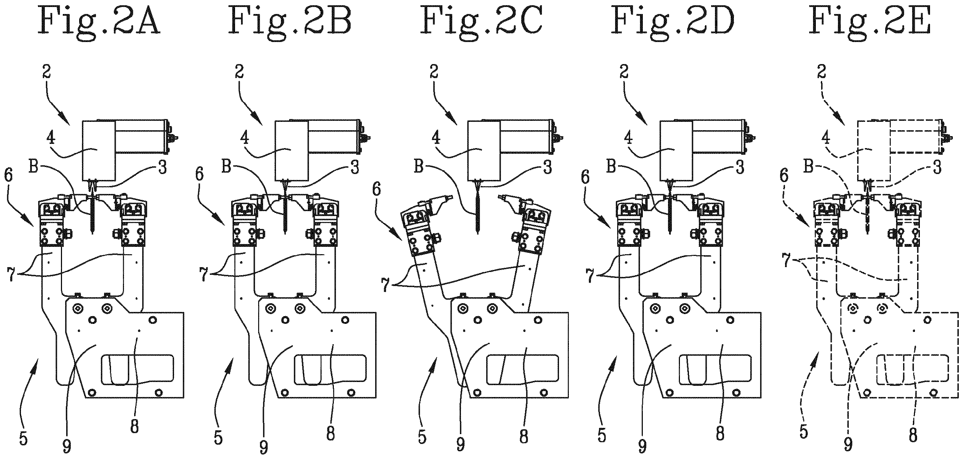

As illustrated in detail in Figures 2A-2E, the retaining elements 6 comprise conveying grippers, acting on side portions of the containers B, specifically on side seal edges.

The retaining elements 6 are hinged at their base portion 8, which is disposed below the space occupied by the containers B.

More specifically, as shown in the accompanying drawings, the arms 7 of the retaining elements 6 are each hinged to a respective hinge, where the axes of rotation of the hinges are mutually parallel, for example to the same conveying block 9 that is movable along the feed path L.

Alternatively, in an embodiment not illustrated, the arms 7 of the retaining elements 6 may be hinged in proximity to a single hinge.

Generally speaking, the axis of rotation of each hinge is preferably parallel with the feed direction.

In other different embodiments, the axis of rotation of the hinges may be perpendicular to the feed path L. In this situation, the containers B are fed by the retaining elements 6 in such a way that their positioning plane is perpendicular to the feed path L.

In the preferred embodiment, the retaining elements 6 are disposed in pairs in such a way that the retaining elements 6 of each pair act on opposite, preferably vertical, side edges of the same container B. The inventive concept this invention is based on is, however, also reproduced by providing single retaining elements or retaining elements in groups of more than two (for example, groups of three retaining elements for each container).

In other words, each container B is held by a pair of retaining elements 6 acting on distinct side portions, where such side portions are preferably symmetrical about a vertical centre line of the container B.

Generally speaking, the retaining elements 6 are configured to adopt a respective conveying configuration, suitable for retaining and conveying the containers B, and a released configuration, in which the containers B are released by the retaining elements 6.

More specifically, in the conveying configuration, the arms 7 of the conveying elements are close together to grasp the container B, whilst in the released configuration, the arms 7 are spaced apart to release the container B.

In use, the released configuration of the retaining elements 6 is implemented at least in proximity to the weighing station 2 for the purpose of releasing the containers B.

The weighing station 2 is provided with at least one grasping gripper 3 configured to adopt an engaged configuration, in which it holds a container B conveyed by the movement means 5, and a released configuration in which it releases the container B.

The weighing station 2 also comprises at least one weighing means 4, associated with a respective grasping gripper 3, where the grasping gripper 4 is configured to measure the weight of the container B being held by the grasping gripper 3.

Preferably, the weighing means 4 each comprise a load cell applied on a supporting arm of a respective grasping gripper 3.

Thus structured, the weighing means 4 is configured to measure the weight of the container B when the container is being held and supported only by the respective grasping gripper 3.

Advantageously, each grasping gripper 3 is disposed at a position above the feed path L, so that the retaining elements 6 cyclically dispose a respective container B under the grasping gripper 3.

According to the invention, as illustrated in Figure 1, the weighing station 2 comprises a plurality of grasping grippers 3 (four in the embodiment illustrated), disposed in series along the feed path L and associated with respective weighing means 4, for transferring and weighing, preferably simultaneously, a plurality of containers B.

In other words, in use, the plurality of grasping grippers 3 are disposed at a position above the feed path L, so that the retaining elements 6 cyclically dispose a respective plurality of containers B under the plurality of grasping grippers 3.

Further, the grasping grippers 3 and the retaining elements 6 are disposed in such a way that the respective grasping portions face a conveyor region in which the containers B find themselves in during their movement along the feed path L.

Advantageously, the grasping grippers 3 and the retaining elements 6 are configured and/or mutually disposed in such a way as to act on distinct portions of the same container B.

Advantageously, the retaining elements 6 and the respective grasping gripper 3 can adopt the respective conveying and engaged configurations simultaneously.

In other words, it is possible to transfer a container B from the retaining elements 6 conveying it to the respective grasping gripper 3 (and vice versa) through at least one simultaneous engaged configuration of the grasping gripper 3 and of the retaining element on the same container B, in which the container B is held simultaneously by the grasping gripper 3 and the retaining elements 6.

That means the container B is transferred from the transfer elements to the respective grasping gripper 3 (and vice versa) without releasing the container in uncontrolled manner.

In effect, during the transfer, the container B maintains its orientation. This orientation will be the same for each of the containers B and is unchanged between an entry zone and an exit zone of the movement means 5.

In an embodiment according to the accompanying drawings, the transfer to and from each grasping gripper 3 is carried out by the same pair of retaining elements 6.

In effect, the movement means 5 can adopt an intermittent movement and the step of weighing can be carried out during a single period in which the movement means stop.

In a variant embodiment, the transfer to and from each grasping gripper 3 is carried out by different pairs of retaining elements 6.

In an alternative embodiment, falling within the same inventive concept, two distinct feed means may be provided: for example, two endless conveyors provided with respective retaining means, a first of which is disposed upstream of the weighing station and another downstream of the weighing station. In this case, while maintaining the condition of simultaneous gripping between each grasping gripper and the respective retaining elements of each of the two conveyors, the controlled orientation of the containers is maintained for the entire duration of the passage through the unit.

This invention achieves the preset aims by overcoming the disadvantages of the prior art and providing a weighing unit 1 whose cost and complexity are reduced.

Advantageously, the structure is considerably simplified. In effect, the weighing unit 1 does not require complex movement means 5 configured for retrieving the containers B because the positioning and orientation of the containers are always uniquely defined.

Advantageously, also, the weighing unit 1 is also highly efficient. In effect, the weighing unit 1 can operate simultaneously on a plurality of containers B.

Figures 2A-2E represent successive steps of a weighing method according to the invention, implemented in particular by the unit 1 described above.

The method is carried out by conveying a succession of containers B along the feed path through the weighing station, in particular by means of the above mentioned pairs of retaining elements 6 movable along the feed path L and configured to hold and convey respective containers B.

At this stage, the retaining elements 6 adopt the conveying configuration, as illustrated in Figure 2A.

Once the containers B are disposed at the weighing station 2, and more specifically, once each container B is disposed at a respective grasping gripper 3, the movement means 5 stop.

The method now comprises a step of transferring the containers B between the retaining elements 6 and the respective grasping gripper 3. Specifically, the step of transferring is carried out through at least one sub-step of simultaneous grasping of the container B between the grasping gripper 3 and the two retaining elements 6.

In particular, the sub-step of simultaneous grasping is carried out by simultaneously grasping different portions of the container B with the grasping gripper 3 and the retaining elements 6.

This sub-step of simultaneous grasping of the container B is illustrated in Figure 2B.

The different portions of the container B are disposed on different sides, preferably perpendicular to each other. More specifically, in the sub-step of simultaneous grasping, the pair of retaining elements 6 holds a respective and preferably distinct vertical edge of the container B, while the grasping gripper 3 grasps an upper edge of it.

In other words, the grasping grippers 3 switch configuration from the released configuration, in which the jaws of the grasping gripper 3 are spaced apart, to the engaged configuration, in which the jaws are close together and hold the container B by acting on opposite faces of the container B.

Once the sub-step of simultaneous grasping is over, the retaining elements 6 release the respective container B by switching their configuration in such a way that the container B is supported solely by the respective grasping gripper 3, as illustrated in Figure 2C.

At this point, the method comprises a step of weighing the containers B. Each container B is weighed by a respective weighing means 4, which is associated with the grasping gripper 3 that is supporting the container B. More specifically, each container B hangs from the respective grasping gripper 3 and weighing is carried out by the load cell applied on the supporting arm of the grasping gripper 3.

Also, the container B is held at a stationary position, preferably while the corresponding retaining elements 6 are held in proximity to the respective vertical edges of the container B but disengaged from the container B. When the step of weighing is over, the method comprises a further step of transferring between the grasping gripper 3 and, preferably, the same retaining elements 6 as used to convey the respective container B to the weighing station 2.

As in the previous step of transferring, the method comprises a sub-step of simultaneous grasping in which each container B is gripped simultaneously by the respective grasping gripper 3 and by the respective retaining elements 6, as illustrated in Figure 2D.

In particular, this sub-step is carried out by simultaneously grasping different portions of the container B with the grasping gripper 3 and the retaining elements 6, where the different portions are the same as those acted upon during the previous step of simultaneous grasping.

At this point, each grasping gripper 3 releases the respective container B in such a way that the container B is supported solely by the respective retaining elements 6, as illustrated in Figure 2E.

Lastly, the containers B are conveyed away from the weighing station along the feed path L by the respective retaining elements 6.

Advantageously, the method described herein overcomes the disadvantages of the prior art by ensuring that each container is weighed correctly and efficiently.

More specifically, this aim is achieved by an automatic and optimized movement of the container within the weighing unit in which the container is securely held at all times by at least one part of the weighing unit or of the movement means. In other words, the container is never left free to drop or slide in uncontrolled manner.

Also, advantageously, the orientation of the container remains uniquely defined. As a result, manipulating the container is considerably simplified and can be done by structurally simple and inexpensive parts and the entire process is more precise and less subject to errors.

## Claims

1. A unit (1) for weighing containers, specifically pouches (B), comprising:
- a weighing station (2) provided with at least one grasping gripper (3) configured to adopt an engaged configuration, in which it holds a container (B), and a released configuration, in which it releases the container (B), the weighing station (2) also comprising a weighing means (4) associated with the at least one grasping gripper (3) and configured to measure the weight of the container (B) being supported by the grasping gripper (3);
- movement means (5) configured to convey the container (B) along a feed path (L) which passes through the weighing station (2); the movement means (5) comprising retaining elements (6) which are movable along the feed path (L) and which are configured to adopt a conveying configuration, suitable for retaining and conveying the container (B), and a released configuration, in which the retaining elements (6) release the container (B);
wherein the grasping grippers (3) and the retaining elements (6) are configured and/or disposed for acting on distinct portions of the same container (B) in such a way as to transfer at least one container (B) between the at least one grasping gripper (3) and at least one corresponding retaining element through at least one configuration of simultaneously engaging the same container (B) with a grasping gripper (3) and with a retaining element; **characterized in that** the weighing station (2) comprises a plurality of grasping grippers (3) associated with a respective plurality of weighing means (4) and configured to transfer and weigh, preferably simultaneously, a respective plurality of the containers (B).

2. The weighing unit (1) according to claim 1, wherein the retaining elements (6) are configured to hold the respective containers (B) at a predetermined orientation while they are conveyed along the feed path (L), the retaining elements (6) preferably comprising conveyor grippers.

3. The weighing unit (1) according to claim 1 or 2, wherein the at least one grasping gripper (3) is disposed at a position above the feed path (L), so that the retaining elements (6) cyclically dispose one or more containers (B) under the at least one grasping gripper (3).

4. The weighing unit (1) according to one or more of the preceding claims, wherein the retaining elements (6) act on side portions of the containers (B), the retaining elements (6) being preferably disposed in pairs in which the retaining elements (6) of each pair are disposed at opposite, preferably vertical side edges of the same container (B).

5. The weighing unit (1) according to one or more of the preceding claims, wherein the movement means (5) comprise an endless conveyor, in particular of the articulated or chain type, to which the retaining elements (6) are connected, preferably as one.

6. The weighing unit (1) according to one or more of the preceding claims, wherein the retaining elements (6) are configured so that, in the conveying configuration, they hold the containers (B) oriented in such a way that the positioning planes thereof are parallel with the feed path (L).

7. The weighing unit (1) according to one or more of the preceding claims, wherein the retaining elements (6) are in the form of grippers and are hinged at a base portion (8) disposed below the space occupied by the containers (B), each of the hinges having a respective axis of rotation that is parallel with the feed path (L).

8. The weighing unit (1) according to one or more of the preceding claims, wherein the weighing means (4) comprise a load cell applied on a supporting arm of the grasping gripper (3).

9. A method for weighing containers (B), specifically pouches, implemented by a weighing unit (1) according to one or more of the preceding claims, comprising the following steps:
- conveying a succession of containers (B) along a feed path (L) through a weighing station (2), the step of conveying being carried out by a succession of retaining elements (6) movable along the feed path (L) and configured to hold and convey respective containers (B);
- at the weighing station (2), weighing a plurality of containers (B) by means of a plurality of weighing means (4) while the containers (B) are supported by respective grasping grippers (3), each grasping gripper (3) being associated with the respective weighing means (4);
- after weighing, conveying the containers (B) away from the weighing station (2) by means of one of the respective retaining elements (6);
wherein the step of weighing each container (B) is preceded and/or followed by a step of transferring the container (B) between at least one respective retaining element (6), in particular the same retaining element (6), and a respective grasping gripper (3);
wherein the step of transferring is carried out through at least one sub-step of simultaneous grasping of the container (B) by means of the grasping gripper (3) and the at least one retaining element (6).

10. The method according to claim 9, wherein the sub-step of simultaneous grasping is carried out by simultaneously grasping different portions of the container (B) with the grasping gripper (3) and with the at least one retaining element (6), the different portions, in particular, being disposed on opposite sides of the container (B), preferably perpendicular to each other.

11. The method according to claim 10, wherein the sub-step of simultaneous grasping is carried out by grasping one or more vertical edges of the container (B) with the at least one retaining element (6) and grasping an upper edge of the container (B) with the grasping gripper (3).

12. The method according to one or more of claims 9 to 11, wherein the step of weighing is accomplished while keeping the container (B) hanging from the grasping gripper (3) and while keeping the container (B) at a stationary position and is preferably carried out by a load cell applied on a supporting arm of the grasping gripper (3).

## Patentansprüche

1. Einheit (1) zum Wiegen von Behältern, insbesondere von Beuteln (B), umfassend:
- eine Wiegestation (2), die mit mindestens einem Greifer zum Greifen (3) versehen ist, der ausgelegt ist, um eine Eingriffskonfiguration, in der er einen Behälter (B) hält, und eine Freigabekonfiguration anzunehmen, in der er den Behälter (B) freigibt, wobei die Wiegestation (2) auch Wiegemittel (4) umfasst, die mit dem mindestens einen Greifer zum Greifen (3) verbunden und ausgelegt sind, um das Gewicht des Behälters (B) zu messen, der von dem Greifer zum Greifen (3) getragen wird,
- Bewegungsmittel (5), die ausgelegt sind, um den Behälter (B) entlang eines Zuführungswegs (L) zu befördern, der durch die Wiegestation (2) führt, wobei die Bewegungsmittel (5) Halteelemente (6) umfassen, die entlang des Zuführungswegs (L) bewegbar sind und die ausgelegt sind, um eine Beförderungskonfiguration, die zum Halten und Befördern des Behälters (B) geeignet ist, und eine Freigabekonfiguration anzunehmen, in der die Halteelemente (6) den Behälter (B) freigeben,
wobei die Greifer zum Greifen (3) und die Halteelemente (6) ausgelegt und/oder angeordnet sind, um auf verschiedene Abschnitte desselben Behälters (B) derart einzuwirken, um mindestens einen Behälter (B) zwischen dem mindestens einen Greifer zum Greifen (3) und mindestens einem entsprechenden Halteelement durch mindestens eine Konfiguration des gleichzeitigen Eingreifens des Behälters (B) mit einem Greifer zum Greifen (3) und mit einem Halteelement zu überführen, **dadurch gekennzeichnet, dass** die Wiegestation (2) mehrere Greifer zum Greifen (3) umfasst, die jeweils mit mehreren Wiegemitteln (4) verbunden sind und ausgelegt sind, um jeweils mehrere Behälter (B), vorzugsweise gleichzeitig, zu überführen und zu wiegen.

2. Einheit zum Wiegen (1) nach Anspruch 1, wobei die Halteelemente (6) ausgelegt sind, um die jeweiligen Behälter (B) in einer vorgegebenen Ausrichtung zu halten, während sie entlang des Zuführungswegs (L) befördert werden, wobei die Halteelemente (6) vorzugsweise Fördergreifer umfassen.

3. Einheit zum Wiegen (1) nach Anspruch 1 oder 2, wobei der mindestens eine Greifer zum Greifen (3) an einer Position oberhalb des Zuführungswegs (L) angeordnet ist, so dass die Halteelemente (6) einen oder mehrere Behälter (B) zyklisch unter dem mindestens einen Greifer zum Greifen (3) anordnen.

4. Einheit zum Wiegen (1) nach einem oder mehreren der vorhergehenden Ansprüche, wobei die Halteelemente (6) auf Seitenabschnitte der Behälter (B) einwirken, wobei die Halteelemente (6) vorzugsweise paarweise angeordnet sind, wobei die Halteelemente (6) jedes Paares an gegenüberliegenden, vorzugsweise vertikalen Seitenkanten desselben Behälters (B) angeordnet sind.

5. Einheit zum Wiegen (1) nach einem oder mehreren der vorhergehenden Ansprüche, wobei die Bewegungsmittel (5) einen Endlosförderer, insbesondere vom Gelenk- oder Kettentyp, umfassen, mit dem die Halteelemente (6) vorzugsweise in einem Stück verbunden sind.

6. Einheit zum Wiegen (1) nach einem oder mehreren der vorhergehenden Ansprüche, wobei die Halteelemente (6) derart ausgelegt sind, dass sie in der Beförderungskonfiguration die Behälter (B) derart ausgerichtet halten, dass die Positionierungsebenen davon parallel zum Zuführungsweg (L) sind.

7. Einheit zum Wiegen(1) nach einem oder mehreren der vorhergehenden Ansprüche, wobei die Halteelemente (6) in der Form von Greifern ausgebildet sind und an einem Basisabschnitt (8) angelenkt sind, der unterhalb des Raums angeordnet ist, der von den Behältern (B) eingenommenen wird, wobei jedes der Scharniere eine jeweilige Drehachse aufweist, die parallel zum Zuführungsweg (L) ist.

8. Einheit zum Wiegen (1) nach einem oder mehreren der vorhergehenden Ansprüche, wobei die Wiegemittel (4) eine Wiegezelle umfassen, die an einem Tragarm des Greifers zum Greifen (3) angebracht ist.

9. Verfahren zum Wiegen von Behältern (B), insbesondere von Beuteln, das von einer Einheit zum Wiegen (1) nach einem oder mehreren der vorhergehenden Ansprüche umgesetzt wird, umfassend die folgenden Schritte:
- Befördern einer Reihe von Behältern (B) entlang eines Zuführungswegs (L) durch eine Wiegestation (2), wobei der Schritt zum Befördern durch eine Reihe von Halteelementen (6) ausgeführt wird, die entlang des Zuführungswegs (L) bewegbar sind und die ausgelegt sind, um entsprechende Behälter (B) zu halten und zu befördern,
- Wiegen von mehreren Behältern (B) an der Wiegestation (2) durch mehrere Wiegemittel (4), während die Behälter (B) von jeweiligen Greifern zum Greifen (3) getragen werden, wobei jeder Greifer zum Greifen (3) mit den jeweiligen Wiegemitteln (4) verbunden ist,
- nach dem Wiegen Befördern der Behälter (B) wegführend von der Wiegestation (2) durch eines oder mehrere der jeweiligen Halteelemente (6),
wobei dem Schritt zum Wiegen jedes Behälters (B) ein Schritt zum Überführen des Behälters (B) zwischen jeweils mindestens einem Halteelement (6), insbesondere demselben Halteelement (6), und einem jeweiligen Greifer zum Greifen (3) vorausgeht und/oder folgt,
wobei der Schritt zum Überführen durch mindestens einen Unterschritt zum gleichzeitigen Greifen des Behälters (B) durch den Greifer zum Greifen (3) und des mindestens einen Halteelements (6) erfolgt.

10. Verfahren nach Anspruch 9, wobei der Unterschritt zum gleichzeitigen Greifen durch gleichzeitiges Greifen unterschiedlicher Abschnitte des Behälters (B) mit dem Greifer zum Greifen (3) und mit dem mindestens einen Halteelement (6) durchgeführt wird, wobei die unterschiedlichen Abschnitte insbesondere auf gegenüberliegenden Seiten des Behälters (B), vorzugsweise senkrecht zueinander, angeordnet sind.

11. Verfahren nach Anspruch 10, wobei der Unterschritt zum gleichzeitigen Greifen durch Greifen einer oder mehrerer vertikaler Kanten des Behälters (B) mit dem mindestens einen Halteelement (6) und Greifen einer Oberkante des Behälters (B) mit dem Greifer zum Greifen (3) durchgeführt wird.

12. Verfahren nach einem oder mehreren der Ansprüche 9 bis 11, wobei der Schritt zum Wiegen durchgeführt wird, während der Behälter (B) am Greifer zum Greifen (3) hängt und während der Behälter (B) in einer stationären Position gehalten wird, und vorzugsweise von einer Wiegezelle durchgeführt wird, die an einem Tragarm des Greifers zum Greifen (3) angebracht ist.

## Revendications

1. Unité (1) de pesage de récipients, en particulier de sachets (B), comprenant :
- un poste de pesage (2) pourvue d'au moins un préhenseur de saisie (3) configuré pour adopter une configuration de mise en prise, dans laquelle il maintient un récipient (B), et une configuration de libération, dans laquelle il libère le récipient (B), le poste de pesage (2) comprenant également des moyens de pesage (4) associés à l'au moins un préhenseur de saisie (3) et configurés pour mesurer le poids du récipient (B) étant supporté par le préhenseur de saisie (3) ;
- des moyens de déplacement (5) configurés pour transporter le récipient (B) le long d'un parcours d'alimentation (L) qui traverse le poste de pesage (2) ; les moyens de déplacement (5) comprenant des éléments de retenue (6) qui sont mobiles le long du parcours d'alimentation (L) et qui sont configurés pour adopter une configuration de transport, adaptée pour retenir et transporter le récipient (B), et une configuration de libération, dans laquelle les éléments de retenue (6) libèrent le récipient (B) ;
dans lequel les préhenseurs de saisie (3) et les éléments de retenue (6) sont configurés et/ou disposés pour agir sur des parties distinctes du même récipient (B) de manière à transférer au moins un récipient (B) entre au moins un préhenseurs de saisie (3) et au moins un élément de retenue correspondant à travers au moins une configuration de mise en prise simultanée du même récipient (B) avec un préhenseur de saisie (3) et avec un élément de retenue ; **caractérisée en ce que** le poste de pesage (2) comprend une pluralité de préhenseurs de saisie (3) associés à une pluralité respective de moyens de pesage (4) et configurés pour transférer et peser, de préférence simultanément, une pluralité respective de récipients (B).

2. Unité de pesage (1) selon la revendication 1, dans laquelle les éléments de retenue (6) sont configurés pour maintenir les récipients respectifs (B) en correspondance d'une orientation prédéterminée pendant qu'ils sont transportés le long du parcours d'alimentation (L), les éléments de retenue (6) comprenant de préférence des préhenseurs de transport.

3. Unité de pesage (1) selon la revendication 1 ou 2, dans laquelle l'au moins un préhenseur de saisie (3) est disposé en correspondance d'une position au-dessus du parcours d'alimentation (L), de sorte que les éléments de retenue (6) disposent cycliquement un ou plusieurs récipients (B) sous l'au moins un préhenseur de saisie (3) .

4. Unité de pesage (1) selon l'une ou plusieurs des revendications précédentes, dans laquelle les éléments de retenue (6) agissent sur les parties latérales des récipients (B), les éléments de retenue (6) étant de préférence disposés par paires dans lesquelles les éléments de retenue (6) de chaque paire sont disposés sur des bords latéraux opposés, de préférence verticaux du même récipient (B).

5. Unité de pesage (1) selon l'une ou plusieurs des revendications précédentes, dans laquelle les moyens de déplacement (5) comprennent un convoyeur sans fin, en particulier du type articulé ou à chaîne, auquel les éléments de retenue (6) sont reliés, de préférence en un seul tenant.

6. Unité de pesage (1) selon l'une ou plusieurs des revendications précédentes, dans laquelle les éléments de retenue (6) sont configurés de sorte que, dans la configuration de transport, ils maintiennent les récipients (B) orientés de manière à ce que leurs plans de positionnement soient parallèles au parcours d'alimentation (L).

7. Unité de pesage (1) selon l'une ou plusieurs des revendications précédentes, dans laquelle les éléments de retenue (6) sont sous la forme de préhenseurs et sont montés articulés en correspondance d'une partie de base (8) disposée sous l'espace occupé par les récipients (B), chacune des articulations comportant un axe de rotation respectif étant parallèle au parcours d'alimentation (L).

8. Unité de pesage (1) selon l'une ou plusieurs des revendications précédentes, dans laquelle les moyens de pesage (4) comprennent une cellule de charge appliquée sur un bras de support du préhenseur de saisie (3).

9. Procédé de pesage de récipients (B), en particulier de sachets, mis en œuvre par une unité de pesage (1) selon l'une ou plusieurs des revendications précédentes, comprenant les étapes suivantes :
- transporter une succession de récipients (B) le long d'un parcours d'alimentation (L) à travers un poste de pesage (2), l'étape de transport étant effectuée par une succession d'éléments de retenue (6) mobiles le long du parcours d'alimentation (L) et configurés pour maintenir et transporter des récipients (B) respectifs ;
- au poste de pesage (2), peser une pluralité de récipients (B) au moyen d'une pluralité de moyens de pesage (4) alors que les récipients (B) sont supportés par des préhenseurs de saisie (3) respectifs, chaque préhenseur de saisie (3) étant associé aux moyens de pesage (4) respectifs ;
- après le pesage, transporter en éloignant les récipients (B) du poste de pesage (2) au moyen de l'un des éléments de retenue respectifs (6) ;
dans lequel l'étape de pesage de chaque récipient (B) est précédée et/ou suivie d'une étape de transfert du récipient (B) entre au moins un élément de retenue respectif (6), en particulier le même élément de retenue (6), et un préhenseur de saisie respectif (3) ;
dans lequel l'étape de transfert est réalisée par au moins une sous-étape de saisie simultanée du récipient (B) au moyen du préhenseur de saisie (3) et de l'au moins un élément de retenue (6).

10. Procédé selon la revendication 9, dans lequel la sous-étape de saisie simultanée est effectuée en saisissant simultanément différentes parties du récipient (B) avec le préhenseur de saisie (3) et avec l'au moins un élément de retenue (6), les différentes parties étant, en particulier, disposées sur des côtés opposés du récipient (B), de préférence perpendiculairement l'une à l'autre.

11. Procédé selon la revendication 10, dans lequel la sous-étape de saisie simultanée est réalisée en saisissant un ou plusieurs bords verticaux du récipient (B) avec l'au moins un élément de retenue (6) et en saisissant un bord supérieur du récipient (B) avec le préhenseur de saisie (3).

12. Procédé selon l'une ou plusieurs des revendications 9 à 11, dans lequel l'étape de pesage est accomplie en maintenant le récipient (B) suspendu au préhenseur de saisie (3) et en maintenant le récipient (B) dans une position stationnaire, et est, de préférence, effectuée par une cellule de charge appliquée sur un bras de support du préhenseur de saisie (3).
